# EUROPÄISCHE PATENTANMELDUNG

(11) **EP 1 612 343 A2**
(43) Veröffentlichungstag der Anmeldung: **04.01.2006**
(21) Anmeldenummer: 05010933.9
(22) Anmeldetag: 20.05.2005
(51) Int. Cl.: E04B 9/04, E04C 2/12, E04F 13/08, E04F 13/10

(54) **Holzbautafel**

(30) Priorität: 01.07.2004 DE 202004010276 U
(71) Anmelder: Lignotrend AG, 3654 Gunten (CH)
(72) Erfinder: Eckert, Werner, 79774 Albbruck-Buch (DE)
(74) Vertreter: Maucher, Wolfgang

(57) **Zusammenfassung**

Die Erfindung betrifft eine Holzbautafel für Decken oder Wände eines Raumes, wobei die Holzbautafel (1) Zwischenräume (5) zur Aufnahme von Schallabsorptionsmaterial aufweist und zumindest eine die Zwischenräume (5) für das Schallabsorptionsmaterial aufweisende Trägerschicht (2) und eine in Gebrauchslage dem Raum zugewandte, nach dem Verbinden mit der Trägerschicht (2) mit Öffnungen (7) zu versehende Sichtplatte (3) aufweist, wobei sich die Öffnungen (7) der Sichtplatte (3) bis zu den das Schallabsorptionsmaterial aufweisenden Zwischenräumen (5) der Trägerschicht (2) erstrecken.

## Beschreibung

Die Erfindung bezieht sich auf eine Holzbautafel für Decken oder Wände eines Raumes, wobei die Holzbautafel Zwischenräume zur Aufnahme von Schallabsorptionsmaterial aufweist.

Solche Holzbautafeln sind in unterschiedlichen Ausführungsformen bekannt. Sie haben sich als Konstruktionselemente wegen ihrer Stabilität bei gleichzeitig vergleichsweise geringem Gewicht bewährt.

Um eine verbesserte Schallabsorption in einem Raum zu erzielen, ist es bekannt, die Wände beziehungsweise die dafür vorgesehenen Holzbautafeln mit schallabsorbierenden Beschichtungen oder schallabsorbierenden Elementen zu versehen. Nachteilig bei vorbekannten Holzbautafeln ist jedoch deren optisches Erscheinungsbild, das vielfach nicht zu dem Raum, in dem die Holzbautafeln angebracht werden sollen, passt.

Es besteht daher insbesondere die Aufgabe, eine Holzbautafel der eingangs genannten Art zu schaffen, die ein ansprechendes Erscheinungsbild hat und bezüglich ihres optischen Erscheinungsbilds individuell an unterschiedliche Räume angepasst werden kann.

Die Lösung dieser Aufgabe besteht darin, dass die Holzbautafel zumindest eine die Zwischenräume für das Schallabsorptionsmaterial aufweisende Trägerschicht und eine in Gebrauchslage dem Raum zugewandte, nach dem Verbinden mit der Trägerschicht mit Öffnungen zu versehende Sichtplatte aufweist, und dass sich die Öffnungen der Sichtplatte bis zu den das Schallabsorptionsmaterial aufweisenden Zwischenräumen der Trägerschicht erstrecken.
Die Sichtplatte kann dabei je nach gewünschter Optik bezüglich Material, Farbe und/oder Oberflächengestaltung individuell ausgebildet sein. Ebenso können die das Schallabsorptionsmaterial freilegenden Öffnungen individuell in die Sichtplatte eingebracht werden. Da die Sichtplatte zunächst geschlossen ausgebildet ist und erst vor der Montage mit Öffnungen gemäß dem Wunsch des Anwenders versehen wird, kann ein großer Vorrat gleichartiger Holzbautafeln vorgehalten werden, so dass lange Lieferzeiten, die durch individuelle Anfertigung der gesamten Holzbautafel entstehen können, vermieden sind.

Eine bevorzugte Ausführungsform sieht vor, dass die Öffnungen Schlitze sind, wobei die Schlitzbreite, die Schlitzlänge und/oder der Abstand benachbarter Schlitze zueinander variabel sind.
Das Einbringen der Öffnungen ist dabei besonders einfach und schnell möglich, wenn die Öffnungen durch Sägeschlitze gebildet sind.
Die Schlitze müssen dabei nicht Längsschlitze sein. Denkbar sind beispielsweise auch bogen-, kreis- oder spiralförmige Schlitze.

Eine andere Ausführungsform sieht vor, dass die Öffnungen Bohrungen, Ausfräsungen oder dergleichen Ausnehmungen sind, wobei die Dimensionierung der Ausnehmungen sowie die Anordnung der Ausnehmungen an der Sichtplatte variabel sind.
Dabei lassen sich besonders individuell gestaltete Holzbautafeln realisieren, beispielsweise mit kreisförmigen, rechteckigen oder dergleichen Ausnehmungen mit geometrischen Formgebungen. Denkbar sind auch Kombinationen unterschiedlich ausgebildeter Ausnehmungen.

Um beim Einbringen der Öffnungen in die Sichtplatte ein Beschädigen des Schallabsorptionsmaterials durch die Säge oder dergleichen Bearbeitungswerkzeug zu verhindern, ist es zweckmäßig, wenn das in den Zwischenräumen befindliche Schallabsorptionsmaterial mit seiner der Sichtplatte zugewandten Seite beabstandet zu dieser ist.

Eine Ausführungsform sieht vor, dass die Trägerschicht mehrere, zumindest teilweise durch rostartig angeordnete Einzelelemente gebildete, miteinander verbundene Einzelschichten aufweist. Mittels der Anzahl der Schichten kann die GesamtDicke des Schallabsorptionsmaterials variiert und somit das Absorptionsverhalten der Holzbautafel festgelegt werden. Das Schallabsorptionsmaterial kann dabei jeweils zwischen den Einzelelementen klemmend gehalten sein, so dass separate Befestigungselemente für das Schallabsorptionsmaterial oder eine Klebeverbindung nicht erforderlich sind und trotzdem ein sicherer Halt des Schallabsorptionsmaterials an der Trägerschicht sichergestellt ist.

Es ist auch möglich, dass die Trägerschicht der Holzbautafel zumindest aus einer ersten Schicht aus zueinander seitlich beabstandeten, parallel zueinander angeordneten Einzelelementen sowie einer zweiten Schicht aus kreuzweise zu der ersten Schicht angeordneten, zueinander seitlich beabstandeten Einzelelementen besteht, wobei die Zwischenräume zwischen den Einzelelementen zumindest einer der Schichten die Zwischenräume für das Schallabsorptionsmaterial bilden. Die Herstellung der Trägerschicht ist dabei besonders einfach möglich, indem eine Anzahl von jeweils gleichartigen, lattenartigen Einzelelementen zueinander ausgerichtet und die Einzelelemente benachbarter Schichten an ihren Berührungspunkten miteinander verbunden, beispielsweise verleimt werden.

Die Sichtplatte kann bezüglich Material, Struktur und Farbgebung an individuelle Gestaltungswünsche angepasst werden. Hierzu ist es zweckmäßig, wenn die Sichtplatte eine Holzeinschichtplatte, eine Holzwerkstoffplatte oder dergleichen Platte ist, die vorzugsweise aus Weichholz und/oder Edelholz besteht.

Es ist vorteilhaft, wenn die Verbindung zwischen der Trägerschicht und der Sichtplatte eine Leimverbindung ist. Dadurch sind an der Außenseite der Sichtplatte keine Nägel oder dergleichen Verbindungselemente sichtbar, was ein harmonisches und hochwertiges Gesamterscheinungsbild der Holzbauplatte bewirkt.

Nachstehend ist ein Ausführungsbeispiel der erfindungsgemäßen Holzbautafel anhand der Zeichnungen näher erläutert.

Es zeigt:
- Fig. 1: eine perspektivische Unterseiten-Ansicht eines Deckenabschnitts bestehend aus einer Anordnung von drei Holzbautafeln,
- Fig. 2: eine perspektivische Ansicht des Deckenabschnitts aus Figur 1 von schräg oben,
- Fig. 3: eine Querseitenansicht einer der Holzbautafeln gemäß Figuren 1 und 2 und
- Fig. 4: eine Längsseitenansicht eines Teilabschnitts einer der Holzbautafeln gemäß Figuren 1 und 2.

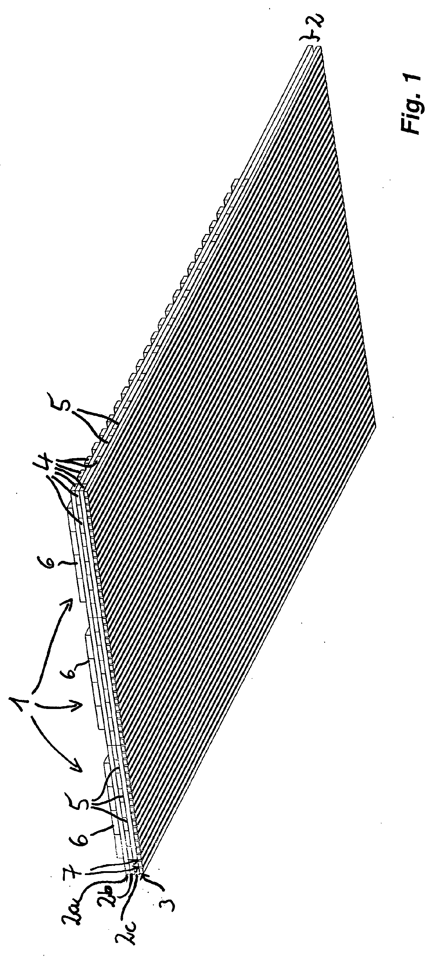

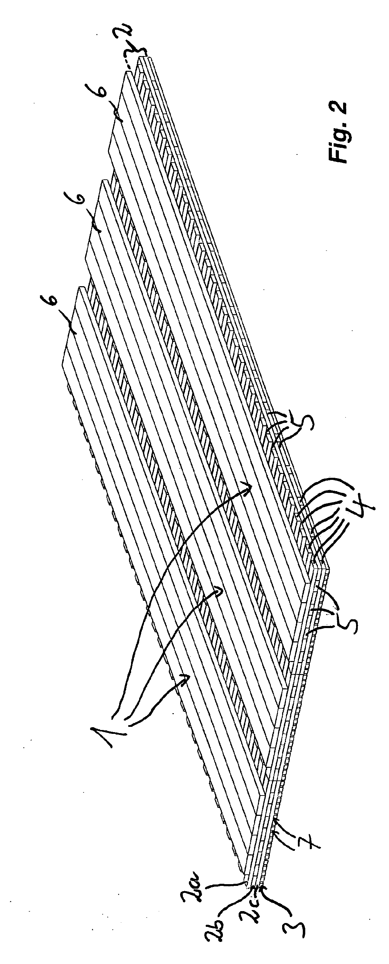

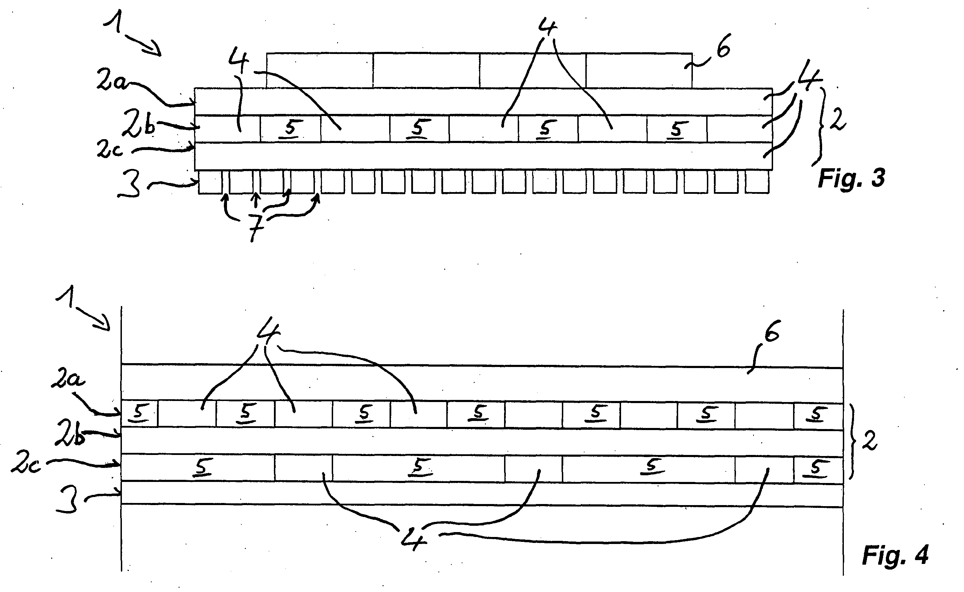

Eine im ganzen mit 1 bezeichnete Holzbautafel für Decken oder Wände eines Raumes weist gemäß den Figuren 1 bis 4 eine aus mehreren Einzelschichten 2a, 2b, 2c bestehende Trägerschicht 2 sowie eine in Gebrauchslage dem Raum zugewandte Sichtplatte 3 auf. Auf der der Sichtplatte 3 entgegengesetzten Seite der Holzbautafel 1 ist eine Deckschicht 6 vorgesehen. In den Figuren 1 und 2 sind jeweils drei Holzbautafeln 1 zur Bildung einer großflächigeren Decke oder Deckennverkleidung nebeneinander angeordnet.

Die einzelnen Trägerschichten 2a, 2b, 2c sind jeweils durch mehrere, parallel zueinander und zueinander beabstandet angeordnete Einzelelemente 4 gebildet, wobei die Einzelelemente übereinander angeordneter Trägerschichten 2a, 2b, 2c jeweils kreuzweise zueinander angeordnet sind und die Trägerschichten somit eine gitterartige Struktur bilden.
Die Zwischenräume zwischen den Einzelelementen 4 einer Einzelschicht 2a, 2b, 2c bilden Zwischenräume 5 zur Aufnahme von in den Figuren nicht dargestelltem Schallabsorptionsmaterial.

Die zunächst geschlossene Sichtplatte 3 wird nach dem Verbinden mit der Trägerschicht 2 mit Öffnungen 7 versehen, die sich bis zu den das Schallabsorptionsmaterial aufweisenden Zwischenräumen 5 der Trägerschicht 2 erstrecken. Durch die Form und Größe sowie die Beabstandung der Öffnungen 7 können das Akustik-Verhalten sowie das optische Erscheinungsbild der Holzbautafel 1 beeinflusst werden.
In den Figuren sind die Öffnungen 7 als Längs-Schlitze mit jeweils gleicher Breite und gleichem Abstand ausgebildet.

## Patentansprüche

1. Holzbautafel für Decken oder Wände eines Raumes, wobei die Holzbautafel (1) Zwischenräume (5) zur Aufnahme von Schallabsorptionsmaterial aufweist, **dadurch gekennzeichnet, dass** die Holzbautafel (1) zumindest eine die Zwischenräume (5) für das Schallabsorptionsmaterial aufweisende Trägerschicht (2) und eine in Gebrauchslage dem Raum zugewandte, nach dem Verbinden mit der Trägerschicht (2) mit Öffnungen (7) zu versehende Sichtplatte (3) aufweist, und dass sich die Öffnungen (7) der Sichtplatte (3) bis zu den das Schallabsorptionsmaterial aufweisenden Zwischenräumen (5) der Trägerschicht (2) erstrecken.

2. Holzbautafel nach Anspruch 1, **dadurch gekennzeichnet, dass** die Öffnungen (7) Schlitze sind, wobei die Schlitzbreite, die Schlitzlänge und/oder der Abstand benachbarter Schlitze zueinander variabel sind.

3. Holzbautafel nach Anspruch 1 oder 2, **dadurch gekennzeichnet, dass** die Öffnungen (7) durch Sägeschlitze gebildet sind.

4. Holzbautafel nach einem der Ansprüche 1 bis 3, **dadurch gekennzeichnet, dass** die Öffnungen (7) Bohrungen, Ausfräsungen oder dergleichen Ausnehmungen sind, wobei die Dimensionierung der Ausnehmungen sowie die Anordnung der Ausnehmungen an der Sichtplatte (3) variabel sind.

5. Holzbautafel nach einem der Ansprüche 1 bis 4, **dadurch gekennzeichnet, dass** das in den Zwischenräumen (5) befindliche Schallabsorptionsmaterial mit seiner der Sichtplatte (3) zugewandten Seite beabstandet zu dieser ist.

6. Holzbautafel nach einem der Ansprüche 1 bis 5, **dadurch gekennzeichnet, dass** die Trägerschicht (2) mehrere, zumindest teilweise durch rostartig angeordnete Einzelelemente (4) gebildete, miteinander verbundene Einzelschichten (2a, 2b, 2c) aufweist.

7. Holzbautafel nach einem der Ansprüche 1 bis 6, **dadurch gekennzeichnet, dass** die Trägerschicht (2) der Holzbautafel (1) zumindest aus einer ersten Schicht aus zueinander seitlich beabstandeten, parallel zueinander angeordneten Einzelelementen (4) sowie einer zweiten Schicht aus kreuzweise zu der ersten Schicht angeordneten, zueinander seitlich beabstandeten Einzelelementen (4) besteht, wobei die Zwischenräume zwischen den Einzelelementen (4) zumindest einer der Schichten die Zwischenräume (5) für das Schallabsorptionsmaterial bilden.

8. Holzbautafel nach einem der Ansprüche 1 bis 7, **dadurch gekennzeichnet, dass** die Sichtplatte (3) eine Holzeinschichtplatte, eine Holzwerkstoffplatte oder dergleichen Platte ist, die vorzugsweise aus Weichholz und/oder Edelholz besteht.

9. Holzbautafel nach einem der Ansprüche 1 bis 8, **dadurch gekennzeichnet, dass** die Verbindung zwischen der Trägerschicht (2) und der Sichtplatte (3) eine Leimverbindung ist.
